# EUROPÄISCHE PATENTANMELDUNG

(11) **EP 3 575 047 A1**
(43) Veröffentlichungstag der Anmeldung: **04.12.2019**
(21) Anmeldenummer: 19162560.7
(22) Anmeldetag: 13.03.2019
(51) Int. Cl.: B25J 17/02, B25J 19/06

(54) **ÜBERWACHUNGSVORRICHTUNG FÜR EINE HANDHABUNGSVORRICHTUNG, INSBESONDERE FÜR EINE HANDHABUNGSVORRICHTUNG EINES KOLLABORIERENDEN ROBOTERS**

(30) Priorität: 15.05.2018 DE 102018207502
(71) Anmelder: Robert Bosch GmbH, 70442 Stuttgart (DE)
(72) Erfinder: Buerer, Stefan, 79843 Löffingen (DE); Schaeuble, Tobias, 79777 Ühlingen-Birkendorf (DE)
(74) Vertreter: Daub, Thomas

(57) **Zusammenfassung**

Die Erfindung geht aus von einer Überwachungsvorrichtung für eine Handhabungsvorrichtung, insbesondere für eine Handhabungsvorrichtung eines kollaborierenden Roboters, mit zumindest einer Sensoreinheit (16) zu einer Überwachung zumindest einer Bewegung einer Greif- und/oder Halteeinheit (18) der Handhabungsvorrichtung und mit zumindest einer Auswerteeinheit (20) zumindest zu einer Auswertung eines Signals der Sensoreinheit (16).

Es wird vorgeschlagen, dass die Auswerteeinheit (20) dazu vorgesehen ist, in Abhängigkeit von zumindest einer durch eine Bewegung der Greif- und/oder Halteeinheit (18) auslösbare Signalunterbrechung der Sensoreinheit (16) zumindest ein Signal auszugeben und/oder in Abhängigkeit von einer durch eine Bewegung der Greif- und/oder Halteeinheit (18) auslösbare Variation eines mittels der Sensoreinheit (16) erfassbaren Kontaktsignals zwischen zumindest zwei Lagerelementen (22, 24, 26, 28) einer Lagereinheit (30) der Handhabungsvorrichtung zu einer beweglichen Lagerung der Greif- und/oder Halteeinheit (18) zumindest ein Signal auszugeben.

## Beschreibung

### Stand der Technik

Aus DE 10 2015 009 654 A1 ist bereits eine Überwachungsvorrichtung für eine Handhabungsvorrichtung, insbesondere für eine Handhabungsvorrichtung eines kollaborierenden Roboters, bekannt, die zumindest eine Sensoreinheit zu einer Überwachung zumindest einer Bewegung einer Greif- und/oder Halteeinheit der Handhabungsvorrichtung und zumindest eine Auswerteeinheit zumindest zu einer Auswertung eines Signals der Sensoreinheit umfasst.

### Offenbarung der Erfindung

Die Erfindung geht aus von einer Überwachungsvorrichtung für eine Handhabungsvorrichtung, insbesondere für eine Handhabungsvorrichtung eines kollaborierenden Roboters, mit zumindest einer Sensoreinheit zu einer Überwachung zumindest einer Bewegung einer Greif- und/oder Halteeinheit der Handhabungsvorrichtung, insbesondere relativ zu einer Kopplungsschnittstelle der Handhabungsvorrichtung, und mit zumindest einer Auswerteeinheit zumindest zu einer Auswertung eines Signals der Sensoreinheit.

Es wird vorgeschlagen, dass die Auswerteeinheit dazu vorgesehen ist, in Abhängigkeit von zumindest einer durch eine Bewegung der Greif- und/oder Halteeinheit, insbesondere relativ zu einer Kopplungsschnittstelle der Handhabungsvorrichtung, auslösbare Signalunterbrechung der Sensoreinheit zumindest ein Signal auszugeben und/oder in Abhängigkeit von einer durch eine Bewegung der Greif- und/oder Halteeinheit, insbesondere relativ zu einer Kopplungsschnittstelle der Handhabungsvorrichtung, auslösbare Variation eines mittels der Sensoreinheit erfassbaren Kontaktsignals zwischen zumindest zwei Lagerelementen einer Lagereinheit der Handhabungsvorrichtung zu einer beweglichen Lagerung der Greif- und/oder Halteeinheit zumindest ein Signal auszugeben. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Sensoreinheit" soll insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Die Sensoreinheit kann beispielsweise als optoelektronische Sensoreinheit, insbesondere Lichtschrankensensoreinheit, als piezoelektrische Sensoreinheit o. dgl. ausgebildet sein. Die Sensoreinheit ist bevorzugt daten- und/oder signaltechnisch mit der Auswerteeinheit verbunden. Bevorzugt umfasst die Sensoreinheit zumindest ein Sensorelement, insbesondere ein optoelektronisches Sensorelement, wie beispielsweise eine Lichtschranke, o. dgl., zu einer Überwachung einer Bewegung der Greif- und/oder Halteeinheit, insbesondere relativ zur Kopplungsschnittstelle der Handhabungsvorrichtung. Alternativ oder zusätzlich umfasst die Sensoreinheit vorzugsweise zumindest ein weiteres Sensorelement, insbesondere ein piezoelektrisches Sensorelement, o. dgl. zu einer Überwachung einer Bewegung zwischen zumindest zwei Lagerelementen der Lagereinheit, insbesondere relativ zueinander. Die Sensoreinheit ist vorzugsweise innerhalb einer Gehäuseeinheit der Handhabungsvorrichtung angeordnet, insbesondere im Bereich der Lagereinheit innerhalb der Gehäuseeinheit.

Die Auswerteeinheit kann als Bestandteil einer Steuer- und/oder Regeleinheit der Handhabungsvorrichtung und/oder des kollaborierenden Roboters ausgebildet sein oder die Auswerteeinheit kann als separate Einheit, die zumindest daten- und/oder signaltechnisch mit der Sensoreinheit und mit der Steuer- und/oder Regeleinheit der Handhabungsvorrichtung und/oder des kollaborierenden Roboters verbunden ist und zumindest einen Daten- und/oder Signalverarbeitungsprozessor aufweist, ausgebildet sein. Die Auswerteeinheit kann auch in die Sensoreinheit integriert sein. Die Auswerteeinheit kann auch dazu vorgesehen sein, ein Vorhandensein oder ein Nichtvorhandensein eines Sensorsignals, insbesondere eines Lichtsignals, auszuwerten, um in Abhängigkeit von dem Vorhandensein oder dem Nichtvorhandensein des Sensorsignals ein Signal auszugeben, insbesondere an die Steuer- und/oder Regeleinheit. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Bevorzugt ist die Auswerteeinheit dazu vorgesehen, in Abhängigkeit von zumindest einer durch eine Bewegung der Greif- und/oder Halteeinheit, insbesondere relativ zur Kopplungsschnittstelle der Handhabungsvorrichtung, auslösbare Signalunterbrechung der Sensoreinheit und/oder in Abhängigkeit von einer durch eine Bewegung der Greif- und/oder Halteeinheit, insbesondere relativ zur Kopplungsschnittstelle der Handhabungsvorrichtung, auslösbare Variation eines mittels der Sensoreinheit erfassbaren Kontaktsignals zwischen den zumindest zwei Lagerelementen der Lagereinheit zu einer beweglichen Lagerung der Greif- und/oder Halteeinheit zumindest ein Signal an die Steuer- und/oder Regeleinheit der Handhabungsvorrichtung und/oder des kollaborierenden Roboters auszugeben. Vorzugsweise ist in Abhängigkeit von einer Signalübertragung von der Auswerteeinheit an die Steuer- und/oder Regeleinheit ein Betrieb der Handhabungsvorrichtung und/oder des kollaborierenden Roboters stoppbar, insbesondere zu einer Vermeidung und/oder Verringerung von Verletzungen eines im Bereich der Handhabungsvorrichtung und/oder des kollaborierenden Roboters befindlichen Arbeiters. Bevorzugt wird eine Bewegung der Greif- und/oder Halteeinheit, insbesondere relativ zur Kopplungsschnittstelle der Handhabungsvorrichtung, zu einer Auslösung einer Signalunterbrechung der Sensoreinheit und/oder zu einer Variation eines mittels der Sensoreinheit erfassbaren Kontaktsignals zwischen den zumindest zwei Lagerelementen der Lagereinheit durch eine Einwirkung einer äußeren Kraft hervorgerufen, insbesondere durch eine Einwirkung einer durch einen Kontakt der Greif- und/oder Halteeinheit mit einem Arbeiter oder mit einem Gegenstand bedingten äußeren Kontaktkraft. Die Bewegung der Greif- und/oder Halteeinheit, insbesondere relativ zur Kopplungsschnittstelle der Handhabungsvorrichtung, zu einer Auslösung einer Signalunterbrechung der Sensoreinheit und/oder zu einer Variation eines mittels der Sensoreinheit erfassbaren Kontaktsignals zwischen den zumindest zwei Lagerelementen der Lagereinheit ist vorzugsweise verschieden von einer, insbesondere betrieblich bedingten, Greif- und/oder Haltebewegung der Greif- und/oder Halteeinheit zu einer Handhabung von Gegenständen. Bevorzugt ist die Auswerteeinheit dazu vorgesehen, in Abhängigkeit von zumindest einer durch eine Bewegung der Greif- und/oder Halteeinheit, insbesondere relativ zu einer Kopplungsschnittstelle der Handhabungsvorrichtung, auslösbaren Signalunterbrechung der Sensoreinheit zumindest ein Signal auszugeben, sobald die Bewegung der Greif- und/oder Halteeinheit, insbesondere relativ zu einer Kopplungsschnittstelle der Handhabungsvorrichtung, zu einer Überschreitung eines, insbesondere in der Auswerteeinheit hinterlegten, Bewegungsgrenzwerts führt.

Mittels der erfindungsgemäßen Ausgestaltung kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden. Es kann vorteilhaft ein an der Greif- und/oder Halteeinheit angeordnetes Produkt ebenfalls bei einer Überwachung berücksichtigt werden, um eine insbesondere hohe Sicherheit zu ermöglichen. Vorzugsweise kann durch eine Ausweichbewegung der Greif- und/oder Halteeinheit ein geringes Verletzungsrisiko für einen Bediener erreicht werden. Es kann vorteilhaft infolge einer Ausweichmöglichkeit der Greif- und/oder Halteeinheit eine große Zeitspanne zu einer Reaktion des Bedieners ermöglicht werden, insbesondere um ein geringes Verletzungsrisiko für einen Bediener zu erreichen. Es kann vorteilhaft eine hohe Arbeitsleistung der Greif- und/oder Halteeinheit bei einem geringen Verletzungsrisiko für einen Bediener erreicht werden. Es kann vorteilhaft mit einer geringen Anzahl an Bauteilen eine zuverlässige Überwachung der Handhabungsvorrichtung erreicht werden. Es kann vorteilhaft ein langer Wartungszyklus erreicht werden. Es kann vorteilhaft eine konstruktiv einfache Sensoreinheit genutzt werden. Es kann vorteilhaft eine kostengünstige Überwachung der Handhabungsvorrichtung ermöglicht werden.

Des Weiteren wird vorgeschlagen, dass die Sensoreinheit als Lichtschrankeneinheit, insbesondere als Einstrahl-Lichtschrankeneinheit, ausgebildet ist und die Auswerteeinheit dazu vorgesehen ist, in Abhängigkeit von zumindest einer durch eine Bewegung der Greif- und/oder Halteeinheit, insbesondere relativ zur Kopplungsschnittstelle der Handhabungsvorrichtung, auslösbare Lichtstrahlunterbrechung der Sensoreinheit zumindest ein Signal auszugeben. Vorzugsweise umfasst die als Lichtschrankeneinheit ausgebildete Sensoreinheit zumindest ein als Sender ausgebildetes Lichtschrankenelement, das zu einem Aussenden eines Lichtstrahls vorgesehen ist. Bevorzugt umfasst die als Lichtschrankeneinheit ausgebildete Sensoreinheit zumindest ein als Empfänger ausgebildetes weiteres Lichtschrankenelement, das zu einem Empfangen eines von dem Lichtschrankenelement ausgesandten Lichtstrahls vorgesehen ist. Das Lichtschrankenelement und das weitere Lichtschrankenelement sind vorzugsweise daten- und/oder signaltechnisch mit der Auswerteeinheit verbunden. Bevorzugt sind das Lichtschrankenelement und das weitere Lichtschrankenelement derart relativ zueinander angeordnet, dass ein von dem Lichtschrankenelement an das weitere Lichtschrankenelement ausgesandter Lichtstrahl durch eine Bewegung der Greif- und/oder Halteeinheit relativ zur Kopplungsschnittstelle der Handhabungsvorrichtung unterbrechbar ist, insbesondere durch eine Bewegung der Greif- und/oder Halteeinheit relativ zur Kopplungsschnittstelle der Handhabungsvorrichtung entlang einer Strecke von mehr als 1 mm, bevorzugt von mehr als 5 mm und besonders bevorzugt von mehr als 10 mm. Es ist jedoch auch denkbar, dass das Lichtschrankenelement und das weitere Lichtschrankenelement derart relativ zueinander angeordnet sind, dass ein von dem Lichtschrankenelement an das weitere Lichtschrankenelement ausgesandter Lichtstrahl durch eine Bewegung der Greif- und/oder Halteeinheit relativ zur Kopplungsschnittstelle der Handhabungsvorrichtung entlang einer Strecke von weniger als 10 mm, bevorzugt von weniger als 5 mm und besonders bevorzugt von weniger als 1 mm unterbrechbar ist. Mittels der erfindungsgemäßen Ausgestaltung kann vorteilhaft konstruktiv einfach eine zuverlässige Überwachung einer Handhabungsvorrichtung ermöglicht werden. Es kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden. Es kann vorteilhaft ein an der Greif- und/oder Halteeinheit angeordnetes Produkt ebenfalls bei einer Überwachung berücksichtigt werden, um eine insbesondere hohe Sicherheit zu ermöglichen.

Ferner wird vorgeschlagen, dass die Sensoreinheit, insbesondere alternativ oder zusätzlich, als Kontaktsensoreinheit, insbesondere als Piezosensoreinheit, ausgebildet ist und die Auswerteeinheit dazu vorgesehen ist, in Abhängigkeit von zumindest einer durch eine Bewegung der Greif- und/oder Halteeinheit, insbesondere relativ zur Kopplungsschnittstelle der Handhabungsvorrichtung, auslösbare Variation einer Krafteinwirkung zwischen den zumindest zwei Lagerelementen der Lagereinheit zumindest ein Signal auszugeben. Vorzugsweise umfasst die als Kontaktsensoreinheit ausgebildete Sensoreinheit zumindest ein als Kontaktsensorelement, insbesondere als Piezosensorelement, ausgebildetes Sensorelement. Das Sensorelement der als Kontaktsensoreinheit ausgebildeten Sensoreinheit ist vorzugsweise an einer Kontaktfläche zumindest eines der zumindest zwei Lagerelemente angeordnet, an der die zumindest zwei Lagerelemente in zumindest einem Zustand aneinander anliegen. Bevorzugt ist die Auswerteeinheit dazu vorgesehen, in Abhängigkeit von zumindest einer durch eine Bewegung der Greif- und/oder Halteeinheit, insbesondere relativ zur Kopplungsschnittstelle der Handhabungsvorrichtung, auslösbare Krafteinwirkung zwischen den zumindest zwei Lagerelementen zumindest ein Signal auszugeben, sobald die Variation der Krafteinwirkung zu einer Unterschreitung eines, insbesondere in der Auswerteeinheit hinterlegten, Grenzwerts, insbesondere eines Kraft- und/oder Druckgrenzwerts, führt. Das Sensorelement der als Kontaktsensoreinheit ausgebildeten Sensoreinheit ist vorzugsweise daten- und/oder signaltechnisch mit der Auswerteeinheit verbunden. Es ist denkbar, dass die als Kontaktsensoreinheit ausgebildete Sensoreinheit weitere Sensorelemente aufweist, die als Kontaktsensorelemente ausgebildet sind und an zumindest einer Kontaktfläche oder an mehreren Kontaktflächen zwischen den zumindest zwei Lagerelementen angeordnet sind. Mittels der erfindungsgemäßen Ausgestaltung kann vorteilhaft konstruktiv einfach eine zuverlässige Überwachung einer Handhabungsvorrichtung ermöglicht werden. Es kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden. Es kann vorteilhaft ein an der Greif- und/oder Halteeinheit angeordnetes Produkt ebenfalls bei einer Überwachung berücksichtigt werden, um eine insbesondere hohe Sicherheit zu ermöglichen.

Des Weiteren wird eine Handhabungsvorrichtung für einen kollaborierenden Roboter, mit zumindest einer erfindungsgemäßen Überwachungsvorrichtung und mit zumindest einer Greif- und/oder Halteeinheit zu einer Handhabung von Gegenständen, insbesondere von zu stapelnden Produkten, vorgeschlagen. Die Greif- und/oder Halteeinheit weist vorzugsweise zumindest ein Greif- und/oder Halteelement auf, das als Vakuumhalteelement, insbesondere Saugnapf, ausgebildet ist. Vorzugsweise umfasst die Greif- und/oder Halteeinheit eine Vielzahl an Greif- und/oder Halteelementen, die zumindest im Wesentlichen analog zueinander ausgebildet sind, insbesondere als Vakuumhalteelemente ausgebildet sind. Es ist jedoch auch denkbar, dass die Greif- und/oder Halteeinheit eine Vielzahl an unterschiedlich ausgebildeten Greif- und/oder Halteelementen aufweist oder dass die Greif- und/oder Halteeinheit eine Vielzahl an Greif- und/oder Halteelementen aufweist, die verschieden von einem Vakuumhalteelement ausgebildet sind, wie beispielsweise als zangenartige Greifer o. dgl. Vorzugsweise ist die Greif- und/oder Halteeinheit zu einer Handhabung von als Verpackungen ausgebildeten Produkten, wie beispielsweise Kartons, Schachteln, Stapeln von Kartons oder Schachteln, Verpackungsfolienrollen o. dgl., von als Verpackungsmaterialen und/oder Verbrauchsmaterialien ausgebildeten Produkten o. dgl. vorgesehen. Mittels der erfindungsgemäßen Ausgestaltung kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden. Es kann vorteilhaft ein an der Greif- und/oder Halteeinheit angeordnetes Produkt ebenfalls bei einer Überwachung berücksichtigt werden, um eine insbesondere hohe Sicherheit zu ermöglichen.

Zudem wird vorgeschlagen, dass die Handhabungsvorrichtung zumindest eine Lagereinheit zu einer beweglichen Lagerung der Greif- und/oder Halteeinheit umfasst, wobei die Sensoreinheit derart relativ zur Lagereinheit angeordnet ist, dass durch eine Bewegung der Greif- und/oder Halteeinheit, insbesondere einer Bewegung der Greif- und/oder Halteeinheit relativ zur Kopplungsschnittstelle der Handhabungsvorrichtung, eine Signalunterbrechung der Sensoreinheit auslösbar ist und/oder dass durch eine Bewegung der Greif- und/oder Halteeinheit, insbesondere eine Bewegung der Greif- und/oder Halteeinheit relativ zur Kopplungsschnittstelle der Handhabungsvorrichtung, ein mittels der Sensoreinheit erfassbares Kontaktsignal zwischen den zumindest zwei Lagerelementen der Lagereinheit variierbar ist. Bevorzugt ist die Sensoreinheit bei einer Ausgestaltung als Lichtschrankeneinheit derart relativ zur Lagereinheit angeordnet, dass ein Lichtstrahl der Lichtschrankeneinheit durch eine Bewegung der Greif- und/oder Halteeinheit, insbesondere eine Bewegung der Greif- und/oder Halteeinheit relativ zur Kopplungsschnittstelle der Handhabungsvorrichtung, unterbrechbar ist. Die als Lichtschrankeneinheit ausgebildete Sensoreinheit kann zumindest teilweise ortsfest an der Kopplungsschnittstelle angeordnet sein, insbesondere zu einer Ermöglichung einer Unterbrechung des Lichtstrahls der Lichtschrankeneinheit durch eine Bewegung zumindest eines der Lagerelemente relativ zur Kopplungsschnittstelle der Handhabungsvorrichtung, insbesondere infolge einer Bewegung des zumindest einen Lagerelements in den Lichtstrahl. Bei einer zumindest teilweisen ortsfesten Anordnung der Lichtschrankeneinheit an der Kopplungsschnittstelle sind vorzugsweise das Lichtschrankenelement und das weitere Lichtschrankenelement ortsfest an der Kopplungsschnittstelle angeordnet. Insbesondere bildet zumindest eines der zumindest zwei Lagerelemente bei einer zumindest teilweisen ortsfesten Anordnung der Lichtschrankeneinheit an der Kopplungsschnittstelle ein Blendenelement der Sensoreinheit zu einer Unterbrechung des Lichtstrahls der Lichtschrankeneinheit. Die als Lichtschrankeneinheit ausgebildete Sensoreinheit kann alternativ auch zumindest teilweise ortsfest an der Greif- und/oder Halteeinheit angeordnet sein, insbesondere zu einer Ermöglichung einer Unterbrechung des Lichtstrahls der Lichtschrankeneinheit durch eine Bewegung der Greif- und/oder Halteeinheit relativ zur Kopplungsschnittstelle der Handhabungsvorrichtung, insbesondere infolge einer Bewegung des Lichtschrankenelements und des weiteren Lichtschrankenelements relativ zu einem ortsfest an der Kopplungsschnittstelle angeordneten Blendenelement der Lichtschrankeneinheit zu einer Unterbrechung des Lichtstrahls. Bei einer zumindest teilweise ortsfesten Anordnung der als Lichtschrankeneinheit ausgebildeten Sensoreinheit an der Greif- und/oder Halteeinheit sind das Lichtschrankenelement und das weitere Lichtschrankenelement an der Greif- und/oder Halteeinheit angeordnet. Insbesondere sind das Lichtschrankenelement und das weitere Lichtschrankenelement bei einer zumindest teilweise ortsfesten Anordnung der als Lichtschrankeneinheit ausgebildeten Sensoreinheit an der Greif- und/oder Halteeinheit zusammen mit der Greif- und/oder Halteeinheit relativ zur Kopplungsschnittstelle bewegbar. Bei einer alternativen oder zusätzlichen Ausgestaltung der Sensoreinheit als Kontaktsensoreinheit ist die Sensoreinheit derart relativ zur Lagereinheit angeordnet, dass zumindest ein Kontaktsensorelement der Sensoreinheit an einem der zumindest zwei Lagerelemente angeordnet ist und das weitere der zwei Lagerelemente relativ zum Kontaktsensorelement bewegbar, insbesondere von dem Kontaktsensorelement abhebbar, ist. Mittels der erfindungsgemäßen Ausgestaltung kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden. Es kann vorteilhaft ein an der Greif- und/oder Halteeinheit angeordnetes Produkt ebenfalls bei einer Überwachung berücksichtigt werden, um eine insbesondere hohe Sicherheit zu ermöglichen.

Des Weiteren wird vorgeschlagen, dass die Handhabungsvorrichtung zumindest eine Gehäuseeinheit und zumindest eine Gehäuselagereinheit umfasst, wobei die Gehäuseeinheit zumindest ein Gehäusebauteil aufweist, das mittels der Gehäuselagereinheit beweglich gelagert ist, wobei die Sensoreinheit zu einer Überwachung einer Bewegung des Gehäusebauteils vorgesehen ist. Es ist denkbar, dass die Handhabungsvorrichtung in einer alternativen Ausgestaltung unabhängig von einer Überwachung der Greif- und/oder Halteeinheit mittels der Sensoreinheit ausgebildet ist. Vorzugsweise umfasst die Handhabungsvorrichtung in der alternativen Ausgestaltung, insbesondere in der unabhängig von der Überwachung der Greif- und/oder Halteeinheit ausgebildeten Ausgestaltung, zumindest eine Sensoreinheit, zumindest eine Gehäuseeinheit und zumindest eine Gehäuselagereinheit, wobei die Gehäuseeinheit zumindest ein Gehäusebauteil aufweist, das mittels der Gehäuselagereinheit beweglich gelagert ist, wobei die Sensoreinheit zu einer Überwachung einer Bewegung des Gehäusebauteils vorgesehen ist. Vorzugsweise umfasst die Gehäuselagereinheit zumindest ein elastisch verformbares Gehäuselagerelement, insbesondere ein Elastomerlagerelement, ein Gummilagerelement o. dgl., mittels dessen das Gehäusebauteil relativ zur Greif- und/oder Halteeinheit beweglich gelagert ist, insbesondere durch eine elastische Verformbarkeit des Gehäuselagerelements. Es ist jedoch auch denkbar, dass das Gehäuselagerelement eine andere, einem Fachmann als sinnvoll erscheinende Ausgestaltung zu einer beweglichen Lagerung des Gehäusebauteils aufweist, wie beispielsweise eine Ausgestaltung als Gelenk, als Scharnier o. dgl. Bevorzugt ist das zumindest eine Gehäuselagerelement mit zumindest einem Ende an der Greif- und/oder Halteeinheit, insbesondere zumindest einer Grundplatte der Greif- und/oder Halteeinheit, fixiert. Vorzugsweise ist infolge einer Bewegung des Gehäusebauteils der Lichtstrahl der als Lichtschrankeneinheit ausgebildeten Sensoreinheit unterbrechbar, insbesondere durch ein an dem Gehäusebauteil angeordnetes Blendenelement der Sensoreinheit. Mittels der erfindungsgemäßen Ausgestaltung kann vorteilhaft eine durch eine äußere Krafteinwirkung hervorgerufene Bewegung des Gehäusebauteils bei einer Überwachung der Handhabungsvorrichtung berücksichtigt werden. Es kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden.

Ferner wird vorgeschlagen, dass die Handhabungsvorrichtung zumindest eine Lagereinheit zu einer beweglichen Lagerung der Greif- und/oder Halteeinheit und zumindest eine Kopplungsschnittstelle zu einer Verbindung mit einem kollaborierenden Roboter umfasst, wobei die Sensoreinheit zumindest ein Blendenelement aufweist, das einteilig mit zumindest einem Lagerelement der Lagereinheit ausgebildet ist oder das ortsfest an der Kopplungsschnittstelle angeordnet ist. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Die Kopplungsschnittstelle der Handhabungsvorrichtung ist vorzugsweise zu einer Fixierung der Handhabungsvorrichtung an einem Roboterarm des kollaborierenden Roboters vorgesehen. Das Blendenelement weist, insbesondere bei einer ortsfesten Anordnung des Blendenelements an der Kopplungsschnittstelle, vorzugsweise eine Durchstrahlöffnung auf, durch die der Lichtstrahl der als Lichtschrankeneinheit ausgebildeten Sensoreinheit, insbesondere in zumindest einem unbewegten Zustand der Greif- und/oder Halteeinheit, hindurchstrahlen kann. Zumindest bei einer Bewegung der Greif- und/oder Halteeinheit relativ zur Kopplungsschnittstelle ist das Blendenelement dazu vorgesehen, den Lichtstrahl der als Lichtschrankeneinheit ausgebildeten Sensoreinheit zu unterbrechen. Bei einer einteiligen Ausgestaltung des Blendenelements mit zumindest einem Lagerelement der Lagereinheit bildet das Lagerelement vorzugsweise selbst das Blendenelement, insbesondere ein durchstrahlöffnungsfreies Blendenelement. Es ist jedoch auch denkbar, dass bei einer einteiligen Ausgestaltung des Blendenelements mit zumindest einem Lagerelement der Lagereinheit das Blendenelement mittels einer stoffschlüssigen Verbindung mit dem Lagerelement verbunden ist und eine Durchstrahlöffnung aufweist, durch die der Lichtstrahl der als Lichtschrankeneinheit ausgebildeten Sensoreinheit, insbesondere in zumindest einem unbewegten Zustand der Greif- und/oder Halteeinheit, hindurchstrahlen kann. Weitere, einem Fachmann als sinnvoll erscheinende Ausgestaltungen sind ebenfalls denkbar. Mittels der erfindungsgemäßen Ausgestaltung kann vorteilhaft eine kompakte Sensoreinheit realisiert werden, die insbesondere infolge kleiner Bewegungen der Greif- und/oder Halteeinheit eine zuverlässige Überwachung ermöglicht. Es kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden.

Zudem wird vorgeschlagen, dass die Handhabungsvorrichtung zumindest eine Gehäuseeinheit umfasst, wobei die Sensoreinheit zumindest ein, insbesondere weiteres, Blendenelement aufweist, das gehäusefest mit einem Gehäusebauteil der Gehäuseeinheit verbunden ist. Das, insbesondere weitere, Blendenelement weist vorzugsweise eine Durchstrahlöffnung auf, durch die der Lichtstrahl der als Lichtschrankeneinheit ausgebildeten Sensoreinheit, insbesondere in zumindest einem unbewegten Zustand des Gehäusebauteils, hindurchstrahlen kann. Zumindest bei einer Bewegung des Gehäusebauteils relativ zur Greif- und/oder Halteeinheit ist das, insbesondere weitere, Blendenelement dazu vorgesehen, den Lichtstrahl der als Lichtschrankeneinheit ausgebildeten Sensoreinheit zu unterbrechen. Es ist auch denkbar, dass das, insbesondere weitere, Blendenelement ortsfest mit der Kopplungsschnittstelle oder mit der Greif- und/oder Halteeinheit verbunden ist. Mittels der erfindungsgemäßen Ausgestaltung kann vorteilhaft eine durch eine äußere Krafteinwirkung hervorgerufene Bewegung des Gehäusebauteils bei einer Überwachung der Handhabungsvorrichtung berücksichtigt werden. Es kann vorteilhaft eine sichere Überwachung einer Handhabungsvorrichtung realisiert werden. Es kann vorteilhaft konstruktiv einfach eine zuverlässige Überwachung einer Handhabungsvorrichtung ermöglicht werden. Es kann vorteilhaft eine hohe Sicherheit gegen eine Verletzung eines sich im Bereich der Handhabungsvorrichtung befindlichen Arbeiters realisiert werden. Es kann vorteilhaft eine kostengünstige Überwachung der Handhabungsvorrichtung erreicht werden, insbesondere da die Greif- und/oder Halteeinheit und die Gehäuseeinheit zusammen mit einem, insbesondere einzelnen, Sensorelement realisiert werden kann.

Des Weiteren wird vorgeschlagen, dass die Handhabungsvorrichtung zumindest eine Lagereinheit zu einer beweglichen Lagerung der Greif- und/oder Halteeinheit umfasst, wobei die Sensoreinheit zu einer Überwachung von zumindest zwei Bewegungsfreiheitsgraden der Greif- und/oder Halteeinheit vorgesehen ist. Bevorzugt ist die Sensoreinheit zu einer Überwachung von zumindest drei Bewegungsfreiheitsgraden der Greif- und/oder Halteeinheit vorgesehen. Bevorzugt ist die Sensoreinheit dazu vorgesehen, eine Schwenkbewegung der Greif- und/oder Halteeinheit um eine Schwenkachse der Greif- und/oder Halteeinheit zu überwachen. Vorzugsweise ist die Sensoreinheit dazu vorgesehen, eine Kippbewegung der Greif- und/oder Halteeinheit um eine Kippachse der Greif- und/oder Halteeinheit zu überwachen. Bevorzugt ist die Sensoreinheit dazu vorgesehen, eine Vertikalbewegung der Greif- und/oder Halteeinheit entlang einer Vertikalachse der Greif- und/oder Halteeinheit zu überwachen. Die Schwenkachse verläuft vorzugsweise zumindest im Wesentlichen senkrecht zur Kippachse. Die Vertikalachse verläuft vorzugsweise zumindest im Wesentlichen senkrecht zur Kippachse. Die Vertikalachse verläuft vorzugsweise zumindest im Wesentlichen senkrecht zur Schwenkachse. Besonders bevorzugt verlaufen die Schwenkachse, die Kippachse und die Vertikalachse jeweils zumindest im Wesentlichen senkrecht zueinander. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Es ist denkbar, dass die Sensoreinheit alternativ oder zusätzlich zu einer Überwachung von Bewegungen der Greif- und/oder Halteeinheit entlang und/oder um weitere, einem Fachmann als sinnvoll erscheinenden Achsen vorgesehen ist, wie beispielswiese zu einer Überwachung von Bewegungen der Greif- und/oder Halteeinheit entlang der Schwenkachse und/oder der Kippachse o. dgl. Mittels der erfindungsgemäßen Ausgestaltung kann vorteilhaft eine sichere Überwachung einer Handhabungsvorrichtung realisiert werden. Es kann vorteilhaft eine hohe Sicherheit gegen eine Verletzung eines sich im Bereich der Handhabungsvorrichtung befindlichen Arbeiters realisiert werden.

Ferner wird ein kollaborierender Roboter mit zumindest einer erfindungsgemäßen Handhabungsvorrichtung vorgeschlagen. Der kollaborierende Roboter ist vorzugsweise dazu vorgesehen, zumindest im Wesentlichen schutzeinrichtungsfrei mit einem Arbeiter in einem Produktionsprozess zusammenzuarbeiten. Der kollaborierende Roboter umfasst vorzugsweise zumindest eine Steuer- und/oder Regeleinheit, die zumindest mit der Auswerteeinheit der Überwachungsvorrichtung daten- und/oder signaltechnisch verbunden ist. Die Steuer- und/oder Regeleinheit ist vorzugsweise dazu vorgesehen, einen Betrieb des kollaborierenden Roboters in Abhängigkeit von einem von der Auswerteeinheit ausgegebenen Signal zu beeinflussen, insbesondere den kollaborierenden Roboter in Abhängigkeit von einem von der Auswerteeinheit ausgegebenen Signal zu stoppen oder einen Betrieb zu unterbinden. Mittels der erfindungsgemäßen Ausgestaltung kann vorteilhaft eine hohe Sicherheit bei einem Betrieb des kollaborierenden Roboters realisiert werden.

Zudem wird vorgeschlagen, dass der kollaborierender Roboter zumindest einen beweglich gelagerten Roboterarm aufweist, an dem die Handhabungsvorrichtung fixiert ist, wobei die Sensoreinheit zumindest teilweise ortsfest an einer Kopplungsschnittstelle der Handhabungsvorrichtung angeordnet ist, mittels derer die Handhabungsvorrichtung an dem Roboterarm fixiert ist, oder zumindest teilweise ortsfest an der Greif- und/oder Halteeinheit angeordnet ist und zusammen mit der Greif- und/oder Halteeinheit relativ zur Kopplungsschnittstelle bewegbar ist. Der Roboterarm umfasst insbesondere mehr als drei Bewegungsachsen, bevorzugt mehr als vier Bewegungsachsen und ganz besonders bevorzugt mehr als fünf Bewegungsachsen. Bevorzugt ist der kollaborierende Roboter zu einem Beladen von Paletten mit Gegenständen, insbesondere mit als Kartons ausgebildeten Produkten, vorgesehen, insbesondere zu einem Stapeln von Kartons auf Paletten. Es ist jedoch auch denkbar, dass der kollaborierende Roboter zu einer anderen, einem Fachmann als sinnvoll erscheinenden Verwendung vorgesehen ist, wie beispielsweise zu einem Folienrollenwechsel, zu einem Nachfüllen von Kartonblankstapeln o. dgl. Mittels der erfindungsgemäßen Ausgestaltung kann vorteilhaft eine zuverlässige Überwachung der an dem Roboterarm angeordneten Handhabungsvorrichtung erreicht werden. Es kann vorteilhaft eine hohe Sicherheit bei einem Betrieb des kollaborierenden Roboters realisiert werden.

Die erfindungsgemäße Überwachungsvorrichtung, die erfindungsgemäße Handhabungsvorrichtung und/oder der erfindungsgemäße kollaborierende Roboter sollen/soll hierbei nicht auf die oben beschriebene Anwendung und Ausführungsform beschränkt sein. Insbesondere können/kann die erfindungsgemäße Überwachungsvorrichtung, die erfindungsgemäße Handhabungsvorrichtung und/oder der erfindungsgemäße kollaborierende Roboter zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßer kollaborierender Roboter mit zumindest einer erfindungsgemäßen Handhabungsvorrichtung in einer schematischen Darstellung,
- Fig. 2: eine Detailansicht der erfindungsgemäßen Handhabungsvorrichtung in einer schematischen Darstellung,
- Fig. 3: eine Schnittansicht der erfindungsgemäßen Handhabungsvorrichtung in einer stark vereinfachten schematischen Darstellung,
- Fig. 4: eine Detailansicht einer Lagereinheit der erfindungsgemäßen Handhabungsvorrichtung in einer schematischen Darstellung,
- Fig. 5: eine Detailansicht einer Bewegung einer Greif- und/oder Halteeinheit der erfindungsgemäßen Handhabungsvorrichtung relativ zu einer Kopplungsschnittstelle der erfindungsgemäßen Handhabungsvorrichtung in einer stark vereinfachten schematischen Darstellung,
- Fig. 6: eine weitere Detailansicht der erfindungsgemäßen Handhabungsvorrichtung mit einer an einer Gehäuseeinheit der Handhabungsvorrichtung angeordneten Sicherheitseinheit in einer stark vereinfachten schematischen Darstellung und
- Fig. 7: eine Schnittansicht erfindungsgemäßen Handhabungsvorrichtung aus Figur 6 in einer stark vereinfachten schematischen Darstellung.

### Beschreibung des Ausführungsbeispiels

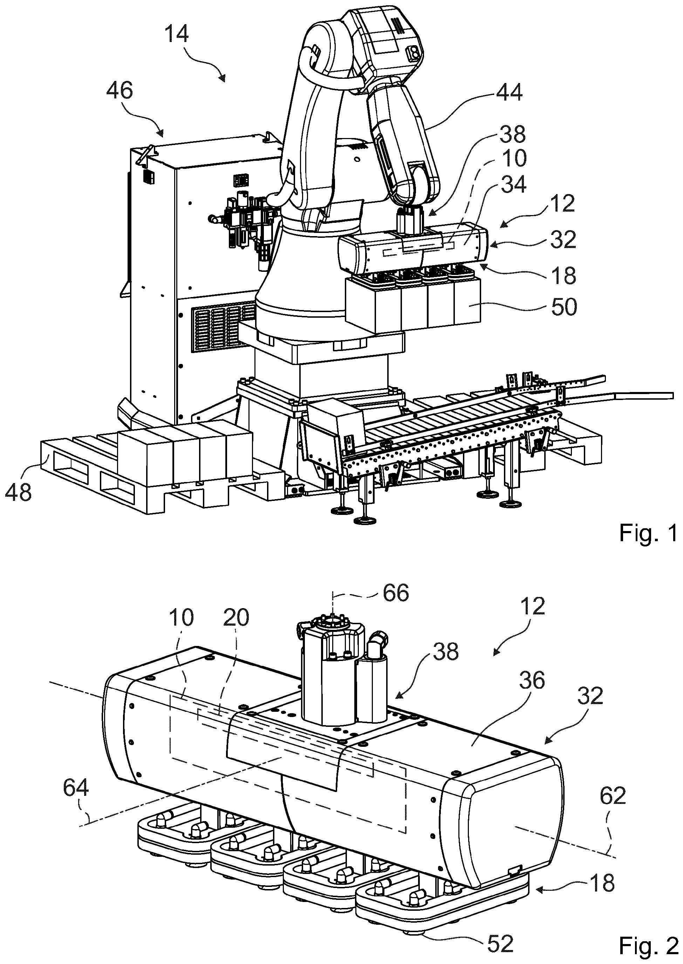

Figur 1 zeigt einen kollaborierenden Roboter 14 mit zumindest einer Handhabungsvorrichtung 12. Der kollaborierenden Roboter 14 umfasst zumindest einen beweglich gelagerten Roboterarm 44, an dem die Handhabungsvorrichtung 12 fixiert ist, insbesondere mittels einer Kopplungsschnittstelle 38 der Handhabungsvorrichtung 12. Der kollaborierende Roboter 14 ist vorzugsweise dazu vorgesehen, zumindest im Wesentlichen schutzeinrichtungsfrei mit einem Arbeiter in einem Produktionsprozess zusammenzuarbeiten. Der kollaborierende Roboter 14 umfasst vorzugsweise zumindest eine Steuer- und/oder Regeleinheit 46, die zu einer Steuerung und/oder Regelung von Arbeitsprozessen des kollaborierenden Roboters 14 vorgesehen ist, insbesondere auf eine, einem Fachmann bereits bekannte Art und Weise. Bevorzugt ist der kollaborierende Roboter 14 zu einem Beladen von Paletten 48 mit Gegenständen 50, insbesondere mit als Kartons ausgebildeten Produkten, vorgesehen, insbesondere zu einem Stapeln von Kartons auf Paletten. Es ist jedoch auch denkbar, dass der kollaborierende Roboter 14 zu einer anderen, einem Fachmann als sinnvoll erscheinenden Verwendung vorgesehen ist.

Zu einer Handhabung, insbesondere zu einem Stapeln, der Gegenstände 50 umfasst der kollaborierende Roboter 14 die Handhabungsvorrichtung 12. Die Handhabungsvorrichtung 12 für den kollaborierenden Roboter 14 umfasst zumindest eine Greif- und/oder Halteeinheit 18 zu einer Handhabung von Gegenständen 50, insbesondere von zu stapelnden Produkten. Die Greif- und/oder Halteeinheit 18 weist vorzugsweise zumindest ein Greif- und/oder Halteelement 52 auf, das bei dem in den Figuren dargestellten Ausführungsbeispiel als Vakuumhalteelement, insbesondere Saugnapf, ausgebildet ist (vgl. Figur 2). Vorzugsweise umfasst die Greif- und/oder Halteeinheit 18 eine Vielzahl an Greif- und/oder Halteelementen 52, die zumindest im Wesentlichen analog zueinander ausgebildet sind, insbesondere als Vakuumhalteelemente ausgebildet sind. Es ist jedoch auch denkbar, dass die Greif- und/oder Halteeinheit 18 eine Vielzahl an unterschiedlich ausgebildeten Greif- und/oder Halteelementen 52 aufweist oder dass die Greif- und/oder Halteeinheit 18 eine Vielzahl an Greif- und/oder Halteelementen 52 aufweist, die verschieden von einem Vakuumhalteelement ausgebildet sind, wie beispielsweise als zangenartige Greifer o. dgl. Vorzugsweise ist die Greif- und/oder Halteeinheit 18 zu einer Handhabung von als Verpackungen ausgebildeten Produkten, wie beispielsweise Kartons, Schachteln o. dgl., vorgesehen. Mittels der Greif- und/oder Halteeinheit 18 sind handzuhabende Gegenstände von einem Förderband nehmbar und auf einer Palette 48 stapelbar, wobei ein Handhabungsablauf mittels der Steuer- und/oder Regeleinheit 46 steuerbar und/oder regelbar ist.

Die Handhabungsvorrichtung für den kollaborierenden Roboter 14 umfasst zumindest eine Überwachungsvorrichtung 10 (vgl. Figur 2). Die Überwachungsvorrichtung 10 ist vorzugsweise dazu vorgesehen, eine Verletzung eines im Arbeitsbereich der Handhabungsvorrichtung 12 befindlichen Arbeiters infolge eines Kontakts mit der Handhabungsvorrichtung 12 und/oder mit den an der Handhabungsvorrichtung 12 temporär angeordneten Gegenständen 50 gering zu halten oder zu vermeiden. Die Überwachungsvorrichtung 10 für die Handhabungsvorrichtung 12, insbesondere für die Handhabungsvorrichtung 12 des kollaborierenden Roboters 14, umfasst zumindest eine Sensoreinheit 16 zu einer Überwachung zumindest einer Bewegung der Greif- und/oder Halteeinheit 18 der Handhabungsvorrichtung 12 und zumindest eine Auswerteeinheit 20 zumindest zu einer Auswertung eines Signals der Sensoreinheit 16. Die Auswerteeinheit 20 ist vorzugsweise daten- und/oder signaltechnisch mit der Steuer- und/oder Regeleinheit 46 verbunden. Die Auswerteeinheit 20 ist dazu vorgesehen, in Abhängigkeit von zumindest einer durch eine Bewegung der Greif- und/oder Halteeinheit 18, insbesondere eine Bewegung der Greif- und/oder Halteeinheit 18 relativ zur Kopplungsschnittstelle 38, auslösbaren Signalunterbrechung der Sensoreinheit 16 und/oder in Abhängigkeit von einer durch eine Bewegung der Greif- und/oder Halteeinheit 18, insbesondere eine Bewegung der Greif- und/oder Halteeinheit 18 relativ zur Kopplungsschnittstelle 38, auslösbaren Variation eines mittels der Sensoreinheit 16 erfassbaren Kontaktsignals zwischen zumindest zwei Lagerelementen 22, 24, 26, 28 einer Lagereinheit 30 der Handhabungsvorrichtung 12 zu einer beweglichen Lagerung der Greif- und/oder Halteeinheit 18 zumindest ein Signal auszugeben, insbesondere an die Steuer- und/oder Regeleinheit 46. Die Steuer- und/oder Regeleinheit 46 ist vorzugsweise dazu vorgesehen, einen Betrieb des kollaborierenden Roboters 14 in Abhängigkeit von einem von der Auswerteeinheit 20 ausgegebenen Signal zu beeinflussen, insbesondere den kollaborierenden Roboter 14 in Abhängigkeit von einem von der Auswerteeinheit 20 ausgegebenen Signal zu stoppen oder einen Betrieb zu unterbinden.

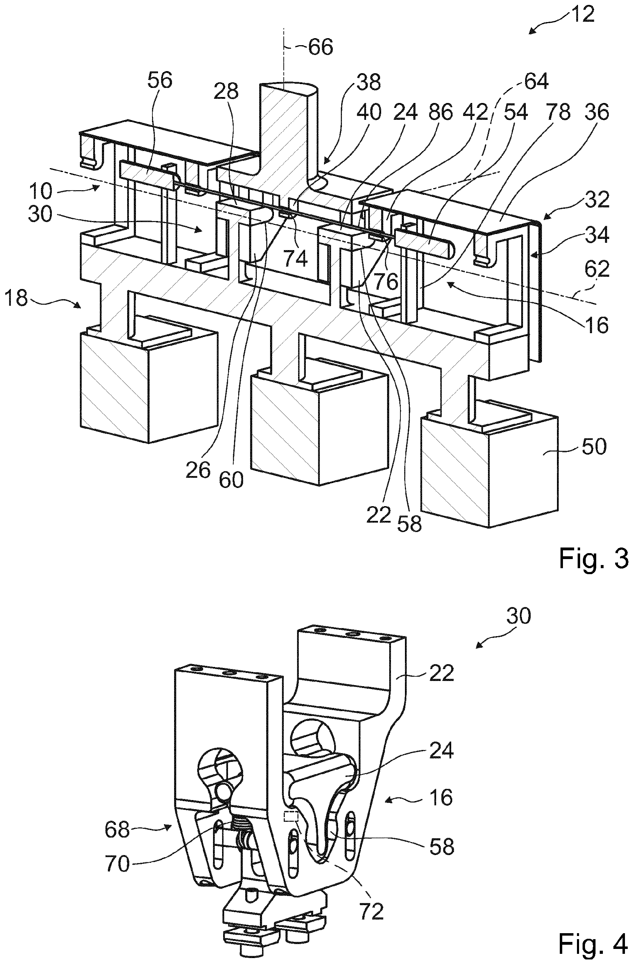

Die Sensoreinheit 16 ist zumindest teilweise ortsfest an der Kopplungsschnittstelle 38 der Handhabungsvorrichtung 12 angeordnet, mittels derer die Handhabungsvorrichtung 12 an dem Roboterarm 44 fixiert ist, oder die Sensoreinheit 16 ist zumindest teilweise ortsfest an der Greif- und/oder Halteeinheit 18 angeordnet und zusammen mit der Greif- und/oder Halteeinheit 18 relativ zur Kopplungsschnittstelle 38 bewegbar (vgl. Figur 3). Die Sensoreinheit 16 ist als Lichtschrankeneinheit, insbesondere als Einstrahl-Lichtschrankeneinheit, ausgebildet und die Auswerteeinheit 20 ist dazu vorgesehen, in Abhängigkeit von zumindest einer durch eine Bewegung der Greif- und/oder Halteeinheit 18 auslösbare Lichtstrahlunterbrechung der Sensoreinheit 16 zumindest ein Signal auszugeben. Vorzugsweise umfasst die als Lichtschrankeneinheit ausgebildete Sensoreinheit 16 zumindest ein als Sender ausgebildetes Lichtschrankenelement 54, das zu einem Aussenden eines Lichtstrahls 86 vorgesehen ist (vgl. Figur 3). Bevorzugt umfasst die als Lichtschrankeneinheit ausgebildete Sensoreinheit 16 zumindest ein als Empfänger ausgebildetes weiteres Lichtschrankenelement 56, das zu einem Empfangen eines von dem Lichtschrankenelement 54 ausgesandten Lichtstrahls 86 vorgesehen ist. Das Lichtschrankenelement 54 und das weitere Lichtschrankenelement 56 sind vorzugsweise daten- und/oder signaltechnisch mit der Auswerteeinheit 20 verbunden. Bevorzugt sind das Lichtschrankenelement 54 und das weitere Lichtschrankenelement 56 derart relativ zueinander angeordnet, dass ein von dem Lichtschrankenelement 54 an das weitere Lichtschrankenelement 56 ausgesandter Lichtstrahl 86 durch eine Bewegung der Greif- und/oder Halteeinheit 18 relativ zur Kopplungsschnittstelle 38 der Handhabungsvorrichtung 12 unterbrechbar ist, insbesondere durch eine Bewegung der Greif- und/oder Halteeinheit 18 relativ zur Kopplungsschnittstelle 38 der Handhabungsvorrichtung 12 entlang einer Strecke von mehr als 1 mm, bevorzugt von mehr als 5 mm und besonders bevorzugt von mehr als 10 mm. Die als Lichtschrankeneinheit ausgebildete Sensoreinheit 16 kann zumindest teilweise ortsfest an der Kopplungsschnittstelle 38 angeordnet sein (in den Figuren nicht näher dargestellt), insbesondere zu einer Ermöglichung einer Unterbrechung eines Lichtstrahls 86 der als Lichtschrankeneinheit ausgebildeten Sensoreinheit 16 durch eine Bewegung zumindest eines der Lagerelemente 22, 24, 26, 28 relativ zur Kopplungsschnittstelle 38 der Handhabungsvorrichtung 12, insbesondere infolge einer Bewegung des zumindest einen Lagerelements 22, 24, 26, 28 in einen Lichtstrahl 86 der als Lichtschrankeneinheit ausgebildeten Sensoreinheit 16 hinein. Bei einer zumindest teilweisen ortsfesten Anordnung der als Lichtschrankeneinheit ausgebildeten Sensoreinheit 16 an der Kopplungsschnittstelle 38 sind vorzugsweise das Lichtschrankenelement 54 und das weitere Lichtschrankenelement 56 ortsfest an der Kopplungsschnittstelle 38 angeordnet. Insbesondere kann zumindest eines der zumindest zwei Lagerelemente 22, 24, 26, 28 bei einer zumindest teilweisen ortsfesten Anordnung der als Lichtschrankeneinheit ausgebildeten Sensoreinheit 16 an der Kopplungsschnittstelle 38 ein Blendenelement der Sensoreinheit 16 zu einer Unterbrechung des Lichtstrahls der als Lichtschrankeneinheit ausgebildeten Sensoreinheit 16 bilden.

Die als Lichtschrankeneinheit ausgebildete Sensoreinheit 16 ist vorzugsweise, wie dies auch in den Figuren 3, 5 und 7 dargestellt ist, zumindest teilweise ortsfest an der Greif- und/oder Halteeinheit 18 angeordnet, insbesondere zu einer Ermöglichung einer Unterbrechung des Lichtstrahls 86 der als Lichtschrankeneinheit ausgebildeten Sensoreinheit 16 durch eine Bewegung der Greif- und/oder Halteeinheit 18 relativ zur Kopplungsschnittstelle 38 der Handhabungsvorrichtung 12, insbesondere infolge einer Bewegung des Lichtschrankenelements 54 und des weiteren Lichtschrankenelements 56 relativ zu einem ortsfest an der Kopplungsschnittstelle 38 angeordneten Blendenelement 40 der als Lichtschrankeneinheit ausgebildeten Sensoreinheit 16 zu einer Unterbrechung des Lichtstrahls 86 der als Lichtschrankeneinheit ausgebildeten Sensoreinheit 16. Bei einer zumindest teilweise ortsfesten Anordnung der als Lichtschrankeneinheit ausgebildeten Sensoreinheit 16 an der Greif- und/oder Halteeinheit 18 sind das Lichtschrankenelement 54 und das weitere Lichtschrankenelement 56 an der Greif- und/oder Halteeinheit angeordnet (vgl. Figur 3). Insbesondere sind das Lichtschrankenelement 54 und das weitere Lichtschrankenelement 56 bei einer zumindest teilweise ortsfesten Anordnung der als Lichtschrankeneinheit ausgebildeten Sensoreinheit 16 an der Greif- und/oder Halteeinheit 18 zusammen mit der Greif- und/oder Halteeinheit 18 relativ zur Kopplungsschnittstelle 38 bewegbar. Die Sensoreinheit 16 umfasst zumindest das Blendenelement 40, das einteilig mit zumindest einem Lagerelement 22, 24, 26, 28 der Lagereinheit 30 ausgebildet ist oder das ortsfest an der Kopplungsschnittstelle 38 angeordnet ist (vgl. Figuren 3 und 4).

Die Sensoreinheit 16 ist vorzugsweise zu einer Überwachung von zumindest zwei Bewegungsfreiheitsgraden der Greif- und/oder Halteeinheit 18 vorgesehen. Bevorzugt ist die Sensoreinheit 16 dazu vorgesehen, eine Schwenkbewegung der Greif- und/oder Halteeinheit 18 um eine Schwenkachse 62 der Greif- und/oder Halteeinheit 18 zu überwachen. Vorzugsweise ist die Sensoreinheit 16 dazu vorgesehen, eine Kippbewegung der Greif- und/oder Halteeinheit 18 um eine Kippachse 64 der Greif- und/oder Halteeinheit 18 zu überwachen. Bevorzugt ist die Sensoreinheit 16 dazu vorgesehen, eine Vertikalbewegung der Greif- und/oder Halteeinheit 18 entlang einer Vertikalachse 66 der Greif- und/oder Halteeinheit 18 zu überwachen. Die Schwenkachse 62 verläuft vorzugsweise zumindest im Wesentlichen senkrecht zur Kippachse 64. Die Vertikalachse 66 verläuft vorzugsweise zumindest im Wesentlichen senkrecht zur Kippachse 64. Die Vertikalachse 66 verläuft vorzugsweise zumindest im Wesentlichen senkrecht zur Schwenkachse 62. Besonders bevorzugt verlaufen die Schwenkachse 62, die Kippachse 64 und die Vertikalachse 66 jeweils zumindest im Wesentlichen senkrecht zueinander.

Figur 4 zeigt eine Detailansicht der Lagereinheit 30 der Handhabungsvorrichtung 12 in einer schematischen Darstellung. Die Lagereinheit 30 ist zu einer beweglichen Lagerung der Greif- und/oder Halteeinheit 18 relativ zur Kopplungsschnittstelle 38 vorgesehen. Die Lagereinheit 30 umfasst vorzugsweise die zumindest zwei Lagerelemente 22, 24, 26, 28, wobei eines der zumindest zwei Lagerelemente 22, 24, 26, 28 an der Kopplungsschnittstelle 38 fixiert ist. Das an der Kopplungsschnittstelle 38 fixierte Lagerelement 22, 26 bildet eine Lageraufnahme zu einer Aufnahme des weiteren Lagerelements 24, 28, das an der Greif- und/oder Halteeinheit 18 fixiert ist. Das an der Kopplungsschnittstelle 38 fixierte Lagerelement 22, 26 weist eine Lagerführungsausnehmung 58, 60 auf, in der das weitere Lagerelement 24, 28 beweglich geführt ist. Das weitere Lagerelement 24, 28 umfasst einen T-förmigen Lagerkopf, der in der Lagerführungsausnehmung 58, 60 angeordnet ist. Der T-förmige Lagerkopf weist abgerundete Kantenbereiche auf, insbesondere um eine Beweglichkeit des T-förmigen Lagerkopfs relativ zur Lagerführungsausnehmung 58, 60 zu ermöglichen. Der T-förmige Lagerkopf ist derart in der Lagerführungsausnehmung 58, 60 angeordnet, dass eine Bewegung des T-förmigen Lagerkopfs entlang und/oder um zumindest drei, insbesondere zumindest im Wesentlichen senkrecht zueinander angeordnete, Bewegungsachsen relativ zu dem an der Kopplungsschnittstelle 38 fixierten Lagerelement 22, 26 realisierbar ist. Der T-förmige Lagerkopf ist bevorzugt mittels einer Federeinheit 68 mit einer Federkraft in Richtung des an der Kopplungsschnittstelle 38 fixierten Lagerelements 22, 26 beaufschlagt, insbesondere mittels einer zumindest im Wesentlichen parallel zur Vertikalachse 66 verlaufenden Federkraft. Die Federeinheit 68 umfasst bevorzugt zumindest ein Zugfederelement 70 zu einer Beaufschlagung des T-förmigen Lagerkopfs mit einer Federkraft. Es ist jedoch auch denkbar, dass die Federeinheit 68 ein anderes, einem Fachmann als sinnvoll erscheinendes Federelement aufweist, das dazu vorgesehen ist, den T-förmigen Lagerkopf mittels einer Federkraft in Richtung des an der Kopplungsschnittstelle 38 fixierten Lagerelements 22, 26 zu beaufschlagen. Die Federeinheit 68 ist vorzugsweise dazu vorgesehen, das weitere Lagerelement 24, 28 in Kontakt mit dem an der Kopplungsschnittstelle 38 fixierten Lagerelement 22, 26 zu halten, insbesondere bei einem Handhabungsbetrieb von Gegenständen 50, der frei von einem Kontakt mit einem Arbeiter ist, und/oder das weitere Lagerelement 24, 28 nach einer Bewegung des Lagerelements 22, 26 relativ zum weiteren Lagerelement 24, 28 infolge eines Kontakts der Handhabungsvorrichtung 12 und/oder der daran angeordneten Gegenständen 50 mit einem Arbeiter wieder in eine Ausgangsposition zu bewegen.

Die Sensoreinheit 16 ist, insbesondere alternativ oder zusätzlich zur Ausgestaltung als Lichtschrankeneinheit, als Kontaktsensoreinheit, insbesondere als Piezosensoreinheit, ausgebildet und die Auswerteeinheit 20 ist dazu vorgesehen, in Abhängigkeit von zumindest einer durch eine Bewegung der Greif- und/oder Halteeinheit 18 auslösbare Variation einer Krafteinwirkung zwischen den zumindest zwei Lagerelementen 22, 24, 26, 28 der Lagereinheit 30 zumindest ein Signal auszugeben. Vorzugsweise umfasst die als Kontaktsensoreinheit ausgebildete Sensoreinheit 16 zumindest ein als Kontaktsensorelement, insbesondere als Piezosensorelement, ausgebildetes Sensorelement 72 (vgl. Figur 4). Das Sensorelement 72 der als Kontaktsensoreinheit ausgebildeten Sensoreinheit 16 ist vorzugsweise an einer Kontaktfläche zumindest eines der zumindest zwei Lagerelemente 22, 24, 26, 28 angeordnet, an der die zumindest zwei Lagerelemente 22, 24, 26, 28 in zumindest einem Zustand aneinander anliegen. Das Sensorelement 72 der als Kontaktsensoreinheit ausgebildeten Sensoreinheit 16 ist vorzugsweise an einer die Lagerführungsausnehmung 58, 60 begrenzenden Kontaktfläche des an der Kopplungsschnittstelle 38 fixierten Lagerelements 22, 26 oder an einer Kontaktfläche des T-förmigen Lagerkopfs des an der Greif- und/oder Halteeinheit 18 fixierten weiteren Lagerelements 24, 28 angeordnet. Bevorzugt ist die Auswerteeinheit 20 dazu vorgesehen, in Abhängigkeit von zumindest einer durch eine Bewegung der Greif- und/oder Halteeinheit 18, insbesondere relativ zur Kopplungsschnittstelle 38 der Handhabungsvorrichtung 12, auslösbare Krafteinwirkung zwischen den zumindest zwei Lagerelementen 22, 24, 26, 28 zumindest ein Signal auszugeben, sobald die Variation der Krafteinwirkung zu einer Unterschreitung eines, insbesondere in der Auswerteeinheit 20 hinterlegten, Grenzwerts, insbesondere eines Kraft- und/oder Druckgrenzwerts, führt. Das Sensorelement 72 der als Kontaktsensoreinheit ausgebildeten Sensoreinheit 16 ist vorzugsweise daten- und/oder signaltechnisch mit der Auswerteeinheit 20 verbunden. Es ist denkbar, dass die als Kontaktsensoreinheit ausgebildete Sensoreinheit 16 weitere Sensorelemente 72 aufweist, die als Kontaktsensorelemente ausgebildet sind und an zumindest einer Kontaktfläche oder an mehreren Kontaktflächen zwischen den zumindest zwei Lagerelementen 22, 24, 26, 28 angeordnet sind.

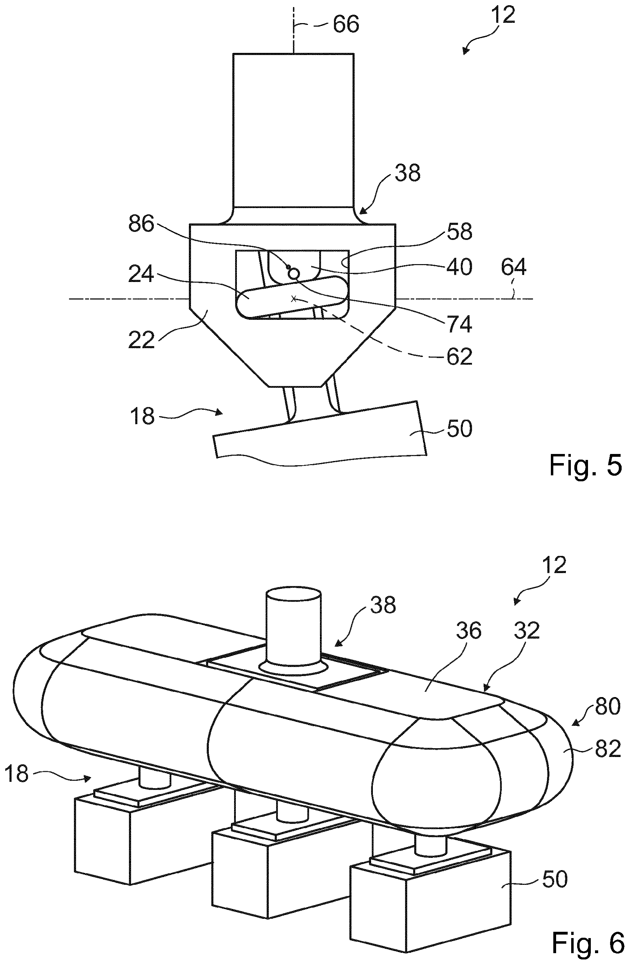

Die Sensoreinheit 16 ist derart relativ zur Lagereinheit 30 angeordnet, dass durch eine Bewegung der Greif- und/oder Halteeinheit 18 eine Signalunterbrechung der, insbesondere als Lichtschrankeneinheit ausgebildeten, Sensoreinheit 16 auslösbar ist und/oder dass durch eine Bewegung der Greif- und/oder Halteeinheit 18 ein mittels der, insbesondere als Kontaktsensoreinheit ausgebildeten, Sensoreinheit 16 erfassbares Kontaktsignal zwischen den zumindest zwei Lagerelementen 22, 24, 26, 28 der Lagereinheit 30 variierbar ist (vgl. Figur 5). Bevorzugt ist die Sensoreinheit 16 bei einer Ausgestaltung als Lichtschrankeneinheit derart relativ zur Lagereinheit 30 angeordnet, dass ein Lichtstrahl der Lichtschrankeneinheit durch eine Bewegung der Greif- und/oder Halteeinheit 18, insbesondere eine Bewegung der Greif- und/oder Halteeinheit 18 relativ zur Kopplungsschnittstelle 38 der Handhabungsvorrichtung 12, unterbrechbar ist.

Die Sensoreinheit 16 umfasst zumindest ein Blendenelement 40, das einteilig mit zumindest einem Lagerelement 22, 24, 26, 28 der Lagereinheit 30 ausgebildet ist oder das ortsfest an der Kopplungsschnittstelle 38 angeordnet ist (vgl. Figuren 3 bis 5). Das Blendenelement 40 weist, insbesondere bei einer ortsfesten Anordnung des Blendenelements 40 an der Kopplungsschnittstelle 38, vorzugsweise eine Durchstrahlöffnung 74 auf, durch die der Lichtstrahl 86 der als Lichtschrankeneinheit ausgebildeten Sensoreinheit 16, insbesondere in zumindest einem unbewegten Zustand der Greif- und/oder Halteeinheit 18, hindurchstrahlen kann. Zumindest bei einer Bewegung der Greif- und/oder Halteeinheit 18 relativ zur Kopplungsschnittstelle 38 ist das Blendenelement 40 dazu vorgesehen, den Lichtstrahl 86 der als Lichtschrankeneinheit ausgebildeten Sensoreinheit 16 zu unterbrechen, insbesondere da das Blendenelement 40 derart relativ zum Lichtstrahl 86 bewegt wird, dass der Lichtstrahl 86 nicht mehr durch die Durchstrahlöffnung 74 hindurchstrahlen kann. Bei einer einteiligen Ausgestaltung des Blendenelements 40 mit zumindest einem der Lagerelemente 24, 28, insbesondere mit dem T-förmigen Lagerkopf, der Lagereinheit 30 bildet das Lagerelement 24, 28, insbesondere der T-förmige Lagerkopf, selbst das Blendenelement 40, insbesondere ein durchstrahlöffnungsfreies Blendenelement. Es ist jedoch auch denkbar, dass bei einer einteiligen Ausgestaltung des Blendenelements 40 mit zumindest einem der Lagerelemente 24, 28 der Lagereinheit 30 das Blendenelement 40 mittels einer stoffschlüssigen Verbindung mit dem Lagerelement 24, 28 verbunden ist und eine Durchstrahlöffnung aufweist, durch die der Lichtstrahl 86 der als Lichtschrankeneinheit ausgebildeten Sensoreinheit 16, insbesondere in zumindest einem unbewegten Zustand der Greif- und/oder Halteeinheit 18, hindurchstrahlen kann. Weitere, einem Fachmann als sinnvoll erscheinende Ausgestaltungen des Blendenelements 40 sind ebenfalls denkbar.

Die Handhabungsvorrichtung 12 umfasst zumindest eine Gehäuseeinheit 32 und zumindest eine Gehäuselagereinheit 34, wobei die Gehäuseeinheit 32 zumindest ein Gehäusebauteil 36 aufweist, das mittels der Gehäuselagereinheit 34 beweglich gelagert ist, wobei die Sensoreinheit 16 zu einer Überwachung einer Bewegung des Gehäusebauteils 36 vorgesehen ist (vgl. Figur 3). Vorzugsweise umfasst die Gehäuselagereinheit 34 zumindest ein elastisch verformbares Gehäuselagerelement 78, insbesondere ein Elastomerlagerelement, ein Gummilagerelement o. dgl., mittels dessen das Gehäusebauteil 36 relativ zur Greif- und/oder Halteeinheit 18 beweglich gelagert ist, insbesondere durch eine elastische Verformbarkeit des Gehäuselagerelements 78. Die Sensoreinheit 16 umfasst zumindest ein, insbesondere weiteres, Blendenelement 42, das gehäusefest mit dem Gehäusebauteil 36 der Gehäuseeinheit 32 verbunden ist. Das, insbesondere weitere, Blendenelement 42 weist vorzugsweise eine Durchstrahlöffnung 76 auf, durch die der Lichtstrahl 86 der als Lichtschrankeneinheit ausgebildeten Sensoreinheit 16, insbesondere in zumindest einem unbewegten Zustand des Gehäusebauteils 36 relativ zur Kopplungsschnittstelle 38 und/oder zur Greif- und/oder Halteeinheit 18, hindurchstrahlen kann. Zumindest bei einer Bewegung des Gehäusebauteils 36 relativ zur Greif- und/oder Halteeinheit 18 ist das, insbesondere weitere, Blendenelement 42 dazu vorgesehen, den Lichtstrahl 86 der als Lichtschrankeneinheit ausgebildeten Sensoreinheit 16 zu unterbrechen, insbesondere da das, insbesondere weitere, Blendenelement 42 derart relativ zum Lichtstrahl 86 bewegt wird, dass der Lichtstrahl 86 nicht mehr durch die Durchstrahlöffnung 76 hindurchstrahlen kann. Vorzugsweise umfasst die Sensoreinheit 16 eine Vielzahl an, insbesondere weiteren, Blendenelementen 42, die ortsfest am Gehäusebauteil 36 angeordnet sind und dazu vorgesehen sind, den Lichtstrahl 86 der als Lichtschrankeneinheit ausgebildeten Sensoreinheit 16 bei einer Bewegung des Gehäusebauteils 36 relativ zur Greif- und/oder Halteeinheit 18 zu unterbrechen.

Figur 6 zeigt eine weitere Detailansicht der Handhabungsvorrichtung 12 mit einer an der Gehäuseeinheit 32 der Handhabungsvorrichtung 12 angeordneten Sicherheitseinheit 80. Die Sicherheitseinheit 80 umfasst zumindest ein elastisch verformbares Schutzleistenelement 82. Das Schutzleistenelement 82 ist bevorzugt als Elastomerschutzleiste, als Luftposterschutzleiste o. dgl. ausgebildet. Es ist jedoch auch denkbar, dass das Schutzleistenelement 82 eine andere, einem Fachmann als sinnvoll erscheinende Ausgestaltung aufweist. Das Schutzleistenelement 82 ist vorzugsweise an einer Außenfläche der Gehäuseeinheit 32 angeordnet. Vorzugsweise umgibt das Schutzleistenelement 82 die Gehäuseeinheit 32 in einer zumindest im Wesentlichen senkrecht zur Vertikalachse 66 verlaufenden Ebene zumindest im Wesentlichen vollständig. Es ist jedoch auch denkbar, dass das Schutzleistenelement 82 die Gehäuseeinheit 32 in der zumindest im Wesentlichen senkrecht zur Vertikalachse 66 verlaufenden Ebene, insbesondere lediglich, abschnittsweise oder teilweise umgibt.

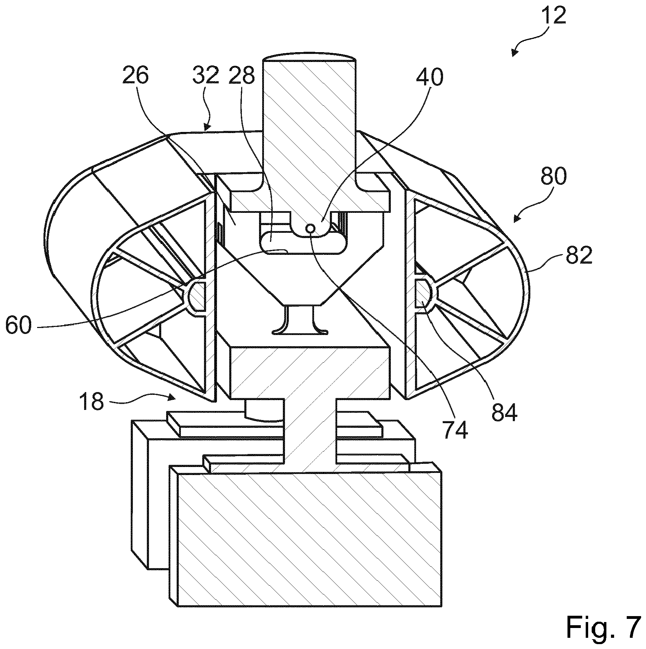

Die Sensoreinheit 16 umfasst vorzugsweise zumindest ein Kontaktsensorelement 84, das dazu vorgesehen ist, eine Verformung des Schutzleistenelements 82 zu überwachen (vgl. Figur 7). Das Kontaktsensorelement 84 ist bevorzugt als Sicherheitsschaltleiste ausgebildet. Es ist jedoch auch denkbar, dass das Kontaktsensorelement 84 eine andere, einem Fachmann als sinnvoll erscheinende Ausgestaltung aufweist. Das Kontaktsensorelement 84 ist bevorzugt zwischen dem Schutzleistenelement 82 und der Gehäuseeinheit 32 angeordnet. Das Kontaktsensorelement 84 ist vorzugsweise daten- und/oder signaltechnisch mit der Auswerteeinheit 20 verbunden. Das Kontaktsensorelement 84 ist bevorzugt dazu vorgesehen, eine durch einen Kontakt mit einem Arbeiter bedingten Verformung des Schutzleistenelements 82 zu erfassen. Die Auswerteeinheit 20 ist dazu vorgesehen, in Abhängigkeit von der erfassten Verformung des Schutzleistenelements 82 ein Signal an die Steuer- und/oder Regeleinheit 46 auszugeben. Vorzugsweise ist eine Ausdehnung des Schutzleistenelements 82 in der zumindest im Wesentlichen senkrecht zur Vertikalachse 66 verlaufenden Ebene derart gewählt, dass das Schutzleistenelement 82 sich über die an der Handhabungsvorrichtung 12 angeordneten Gegenstände 50 hinweg erstreckt. Es kann vorteilhaft eine sichere Erfassung eines Kontakts der Handhabungsvorrichtung 12 mit einem Arbeiter entlang einer zumindest im Wesentlichen parallel zu der zumindest im Wesentlichen senkrecht zur Vertikalachse 66 verlaufenden Ebene ausgerichteten Richtung erreicht werden.

Mittels der Überwachungsvorrichtung 10 kann vorteilhaft eine sichere Überwachung der Handhabungsvorrichtung 12 realisiert werden. Es kann vorteilhaft eine hohe Sicherheit gegen eine Verletzung eines sich im Bereich der Handhabungsvorrichtung 12 befindlichen Arbeiters realisiert werden. Es kann vorteilhaft ein an der Greif- und/oder Halteeinheit 18 angeordnetes Produkt ebenfalls bei einer Überwachung berücksichtigt werden, um eine insbesondere hohe Sicherheit zu ermöglichen.

## Patentansprüche

1. Überwachungsvorrichtung für eine Handhabungsvorrichtung, insbesondere für eine Handhabungsvorrichtung eines kollaborierenden Roboters, mit zumindest einer Sensoreinheit (16) zu einer Überwachung zumindest einer Bewegung einer Greif- und/oder Halteeinheit (18) der Handhabungsvorrichtung und mit zumindest einer Auswerteeinheit (20) zumindest zu einer Auswertung eines Signals der Sensoreinheit (16), **dadurch gekennzeichnet, dass** die Auswerteeinheit (20) dazu vorgesehen ist, in Abhängigkeit von zumindest einer durch eine Bewegung der Greif- und/oder Halteeinheit (18) auslösbare Signalunterbrechung der Sensoreinheit (16) zumindest ein Signal auszugeben und/oder in Abhängigkeit von einer durch eine Bewegung der Greif- und/oder Halteeinheit (18) auslösbare Variation eines mittels der Sensoreinheit (16) erfassbaren Kontaktsignals zwischen zumindest zwei Lagerelementen (22, 24, 26, 28) einer Lagereinheit (30) der Handhabungsvorrichtung zu einer beweglichen Lagerung der Greif- und/oder Halteeinheit (18) zumindest ein Signal auszugeben.

2. Überwachungsvorrichtung nach Anspruch 1, **dadurch gekennzeichnet, dass** die Sensoreinheit (16) als Lichtschrankeneinheit, insbesondere als Einstrahl-Lichtschrankeneinheit, ausgebildet ist und die Auswerteeinheit (20) dazu vorgesehen ist, in Abhängigkeit von zumindest einer durch eine Bewegung der Greif- und/oder Halteeinheit (18) auslösbare Lichtstrahlunterbrechung der Sensoreinheit (16) zumindest ein Signal auszugeben.

3. Überwachungsvorrichtung zumindest nach Anspruch 1, **dadurch gekennzeichnet, dass** die Sensoreinheit (16) als Kontaktsensoreinheit, insbesondere als Piezosensoreinheit, ausgebildet ist und die Auswerteeinheit (20) dazu vorgesehen ist, in Abhängigkeit von zumindest einer durch eine Bewegung der Greif- und/oder Halteeinheit (18) auslösbare Variation einer Krafteinwirkung zwischen den zumindest zwei Lagerelementen (22, 24, 26, 28) der Lagereinheit (30) zumindest ein Signal auszugeben.

4. Handhabungsvorrichtung für einen kollaborierenden Roboter, mit zumindest einer Überwachungsvorrichtung nach einem der vorhergehenden Ansprüche, und mit zumindest einer Greif- und/oder Halteeinheit (18) zu einer Handhabung von Gegenständen, insbesondere von zu stapelnden Produkten.

5. Handhabungsvorrichtung nach Anspruch 4, **gekennzeichnet durch** zumindest eine Lagereinheit (30) zu einer beweglichen Lagerung der Greif- und/oder Halteeinheit (18), wobei die Sensoreinheit (16) derart relativ zur Lagereinheit (30) angeordnet ist, dass durch eine Bewegung der Greif- und/oder Halteeinheit (18) eine Signalunterbrechung der Sensoreinheit (16) auslösbar ist und/oder dass durch eine Bewegung der Greif- und/oder Halteeinheit (18) ein mittels der Sensoreinheit (16) erfassbares Kontaktsignal zwischen zumindest zwei Lagerelementen (22, 24, 26, 28) der Lagereinheit (30) variierbar ist.

6. Handhabungsvorrichtung für einen kollaborierenden Roboter, insbesondere nach Anspruch 4 oder 5, **gekennzeichnet durch** zumindest eine, insbesondere die, Sensoreinheit (16), zumindest eine Gehäuseeinheit (32) und zumindest eine Gehäuselagereinheit (34), wobei die Gehäuseeinheit (32) zumindest ein Gehäusebauteil (36) aufweist, das mittels der Gehäuselagereinheit (34) beweglich gelagert ist, wobei die Sensoreinheit (16) zu einer Überwachung einer Bewegung des Gehäusebauteils (36) vorgesehen ist.

7. Handhabungsvorrichtung nach einem der Ansprüche 4 bis 6, **gekennzeichnet durch** zumindest eine Lagereinheit (30) zu einer beweglichen Lagerung der Greif- und/oder Halteeinheit (18) und zumindest eine Kopplungsschnittstelle (38) zu einer Verbindung mit einem kollaborierenden Roboter, wobei die Sensoreinheit (16) zumindest ein Blendenelement (40) aufweist, das einteilig mit zumindest einem Lagerelement (22, 24, 26, 28) der Lagereinheit (30) ausgebildet ist oder das ortsfest an der Kopplungsschnittstelle (38) angeordnet ist.

8. Handhabungsvorrichtung nach einem der Ansprüche 4 bis 7, **gekennzeichnet durch** zumindest eine Gehäuseeinheit (32), wobei die Sensoreinheit (16) zumindest ein, insbesondere weiteres, Blendenelement (42) aufweist, das gehäusefest mit einem Gehäusebauteil (36) der Gehäuseeinheit (32) verbunden ist.

9. Handhabungsvorrichtung nach einem der Ansprüche 4 bis 8, **gekennzeichnet durch** zumindest eine Lagereinheit (30) zu einer beweglichen Lagerung der Greif- und/oder Halteeinheit (18), wobei die Sensoreinheit (16) zu einer Überwachung von zumindest zwei Bewegungsfreiheitsgraden der Greif- und/oder Halteeinheit (18) vorgesehen ist.

10. Kollaborierender Roboter mit zumindest einer Handhabungsvorrichtung nach einem der Ansprüche 4 bis 9.

11. Kollaborierender Roboter nach Anspruch 10, **gekennzeichnet durch** zumindest einen beweglich gelagerten Roboterarm (44), an dem die Handhabungsvorrichtung fixiert ist, wobei die Sensoreinheit (16) zumindest teilweise ortsfest an einer Kopplungsschnittstelle (38) der Handhabungsvorrichtung angeordnet ist, mittels derer die Handhabungsvorrichtung an dem Roboterarm (44) fixiert ist, oder zumindest teilweise ortsfest an der Greif- und/oder Halteeinheit (18) angeordnet ist und zusammen mit der Greif- und/oder Halteeinheit (18) relativ zur Kopplungsschnittstelle (38) bewegbar ist.
